# EUROPEAN PATENT SPECIFICATION

(11) **EP 4 180 244 B1**
(45) Date of publication and mention of the grant of the patent: **04.06.2025**
(21) Application number: 22206274.7
(22) Date of filing: 09.11.2022
(51) Int. Cl.: B60C 11/03, B60C 11/11, B60C 11/12

(54) **TIRE**
REIFEN
PNEUMATIQUE

(30) Priority: 11.11.2021 JP 2021184249
(43) Date of publication of application: 17.05.2023
(73) Proprietor: Sumitomo Rubber Industries, Ltd., Kobe-shi, Hyogo 651-0072 (JP)
(72) Inventor: MIHARA, Naoya, Kobe-shi, 651-0072 (JP)
(74) Representative: Manitz Finsterwald Patent- und Rechtsanwaltspartnerschaft mbB

(56) References cited:
- CN-U- 206 733 968
- JP-A- 2011 515 266
- JP-A- 2013 063 697

## Description

### BACKGROUND OF THE INVENTION

### Field of the Invention

The present invention relates to a tire.

### Background Art

Japanese Laid-Open Patent Publication No. 2019-104411 describes a tire having, in a tread portion thereof, hexagonal blocks that are formed by a plurality of zigzag circumferential grooves and lateral grooves connecting the zigzag circumferential grooves. The zigzag circumferential grooves include a pair of center circumferential grooves, and a pair of shoulder circumferential grooves each having a larger groove width than the center circumferential grooves. The hexagonal blocks each have a second sipe that extends across the hexagonal block in the tire axial direction. Such a tire has a reduced rolling resistance, and the occurrence of cracks is suppressed in the groove bottoms of the lateral grooves.

However, the tire of Japanese Laid-Open Patent Publication No. 2019-104411 has a drawback that each center circumferential groove has a small groove width, which deteriorates drainage performance and therefore reduces wet performance.

A tire in accordance with the preamble of claim 1 is known from JP 2011 515266 A. Related tires are described in CN 206 733 968 U and JP 2013 063697 A.

The present invention has been made in view of the above circumstances, and it is a main object of the present invention to provide a tire having improved wet performance while maintaining rolling resistance performance.

### SUMMARY OF THE INVENTION

The object is solved by a tire having the features of claim 1. Sub-claims are directed to preferable embodiments of the invention.

The present invention is directed to a tire including a tread portion, wherein the tread portion includes a plurality of circumferential grooves extending in a zigzag manner in a tire circumferential direction so as to form zigzag peak portions, a plurality of lateral grooves connecting the zigzag peak portions of the circumferential grooves adjacent to each other in a tire axial direction, and a plurality of hexagonal blocks formed by the plurality of circumferential grooves and the plurality of lateral grooves, the circumferential grooves include a pair of shoulder circumferential grooves disposed closer to tread ends and at least one crown circumferential groove disposed inward in the tire axial direction of the pair of shoulder circumferential grooves, a groove width of the crown circumferential groove is smaller than groove widths of the pair of shoulder circumferential grooves, and each of the hexagonal blocks is provided with a sipe extending in the tire axial direction, and a wide groove portion connected to an inner side in a tire radial direction of the sipe and extending in the tire axial direction with a width larger than that of the sipe. The at least one crown circumferential groove includes a pair of crown circumferential grooves provided on both sides of a tire equator, respectively, the plurality of lateral grooves include a plurality of crown lateral grooves connecting the crown circumferential grooves, and a plurality of middle lateral grooves connecting the crown circumferential grooves and the shoulder circumferential grooves. The plurality of hexagonal blocks include a plurality of middle blocks each delimited by the crown circumferential groove, the shoulder circumferential groove, and the middle lateral grooves adjacent to each other in the tire circumferential direction. An inner end in the tire axial direction of the wide groove portion of each middle block overlaps an intersection portion of the crown lateral groove and the crown circumferential groove in the tire circumferential direction. The transverse cross-sectional area of the wide groove portion of each middle block is 10% to 40% of a transverse cross-sectional area of the crown lateral groove.

The tire of the present invention, which has the above features, can have improved wet performance while maintaining rolling resistance performance.

According to an embodiment of the invention, the crown circumferential groove has a pair of groove walls extending in a longitudinal direction thereof, and the pair of groove walls are at least partially brought into contact with each other when a normal load is applied.

According to an embodiment of the invention, the groove width of the crown circumferential groove is 1% to 20% of the groove width of the shoulder circumferential groove.

According to an embodiment of the invention, the sipe extends in a zigzag manner in a sipe longitudinal direction and the tire radial direction.

According to an embodiment of the invention, the wide groove portion has a circular or elliptical transverse cross-sectional shape.

According to an embodiment of the invention, not less than 80% of a transverse cross-sectional area of the wide groove portion of each middle block overlaps the intersection portion of the crown lateral groove in the tire circumferential direction.

According to an embodiment of the invention, the plurality of hexagonal blocks include a plurality of crown blocks delimited by one pair of the crown circumferential grooves, and the crown lateral grooves, and both ends in the tire axial direction of the wide groove portion of each crown block each coincide with an intersection portion of one of the middle lateral grooves and one of the crown circumferential grooves in the tire circumferential direction.

According to an embodiment of the invention, a ratio (La/Wa) of a length La in the tire circumferential direction to a width Wa in the tire axial direction of each hexagonal block is 1.2 to 1.8.

### BRIEF DESCRIPTION OF THE DRAWINGS

FIG. 1 is a plan view of a tread portion showing an embodiment of the tire of the present invention;
FIG. 2 is a cross-sectional view taken along a line A-A in FIG. 1;
FIG. 3 is a plan view of the tread portion;
FIG. 4 is a perspective view for describing an overview of a sipe and a wide groove portion;
FIG. 5(a) is a cross-sectional view taken along a line B-B in FIG. 3;
FIG. 5(b) is a cross-sectional view taken along a line C-C in FIG. 3;
FIG. 6(a) is a cross-sectional view taken along a line D-D in FIG. 3; and
FIG. 6(b) is a cross-sectional view taken along a line E-E in FIG. 3.

### DETAILED DESCRIPTION

Hereinafter, an embodiment of the present invention will be described with reference to the drawings.

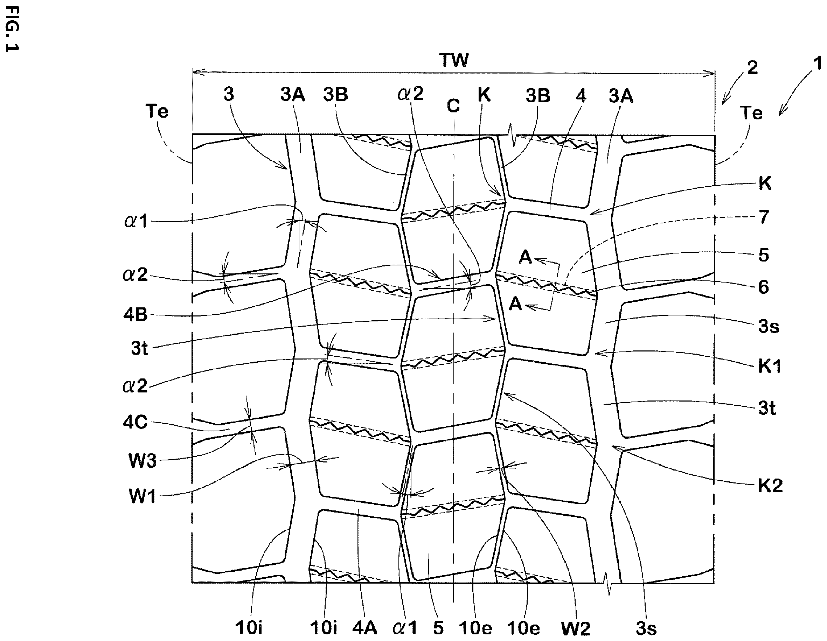

FIG. 1 is a plan view of a tread portion 2 of a tire 1 of the present invention. The tire 1 of the present invention is, for example, a heavy-duty pneumatic tire. The tire 1 of the present invention may, for example, be used as a pneumatic tire for a passenger car or motorcycle, or a non-pneumatic tire the interior of which is not filled with compressed air.

As shown in FIG. 1, the tread portion 2 includes a plurality of circumferential grooves 3 which extend in a zigzag manner in the tire circumferential direction so as to form zigzag peak portions K, and a plurality of lateral grooves 4 which connect the zigzag peak portions K of the circumferential grooves 3 adjacent to each other in the tire axial direction. As a result, the tread portion 2 includes, for example, a plurality of hexagonal blocks 5 formed by the circumferential grooves 3 and the lateral grooves 4.

The circumferential grooves 3 include a pair of shoulder circumferential grooves 3A disposed closer to tread ends Te, and at least one crown circumferential groove 3B disposed inward in the tire axial direction of the pair of shoulder circumferential grooves 3A. In the inventive tire, a pair of crown circumferential grooves 3B are provided on both sides of a tire equator C, respectively.

The "tread ends Te" correspond to the outermost ground contact positions in the tire axial direction when the tire 1 is brought into contact with a flat surface at a camber angle of 0° with a normal load applied to the tire 1 in a normal state where the tire 1 is fitted on a normal rim and inflated to a normal internal pressure and no load is applied to the tire 1. Unless otherwise specified, the values of dimensions and the like of components of the tire 1 are measured in the normal state. The distance in the tire axial direction between both tread ends Te is a tread width TW.

The "normal rim" is a rim that is defined, in a standard system including a standard on which the tire 1 is based, by the standard for each tire, and is, for example, the "standard rim" in the JATMA standard, the "Design Rim" in the TRA standard, or the "Measuring Rim" in the ETRTO standard.

The "normal internal pressure" is an air pressure that is defined, in a standard system including a standard on which the tire 1 is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The "normal load" is a load that is defined, in a standard system including a standard on which the tire 1 is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

A groove width W2 of each crown circumferential groove 3B is smaller than a groove width W1 of each shoulder circumferential groove 3A. Due to this, the apparent stiffness of the hexagonal blocks 5 adjacent to the crown circumferential groove 3B, on which a great ground-contact pressure acts, is maintained at a high level, which suppresses a decrease in rolling resistance performance and wear resistance performance.

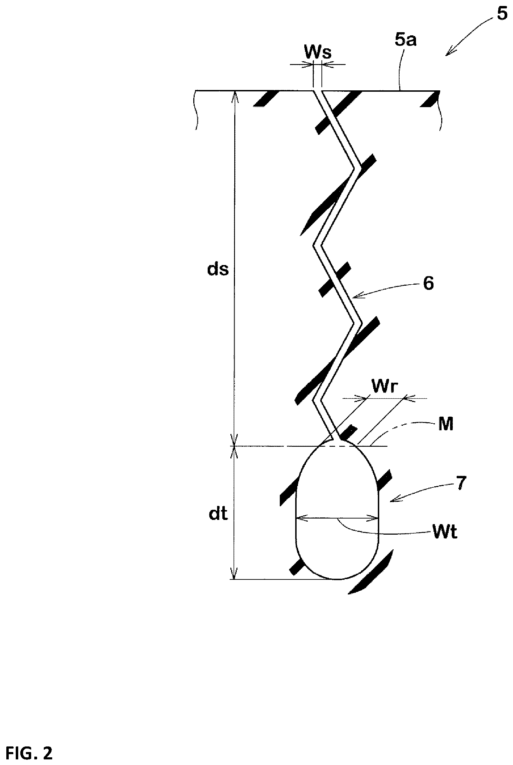

FIG. 2 is a cross-sectional view taken along a line A-A in FIG. 1. As shown in FIGS. 1 and 2, each hexagonal block 5 is provided with a sipe 6 extending in the tire axial direction, and a wide groove portion 7 which is connected to the inner side in the tire radial direction of the sipe 6 and extends in the tire axial direction with a width Wt larger than that of the sipe 6. The sipe 6 reduces the strain caused by the movement of the entire block, and therefore, rolling resistance performance and wear resistance performance are maintained at a higher level. The wide groove portion 7 can take in a layer of water on a tread surface of the block through the sipe 6, and drain the water from the circumferential groove 3 to the outside of the tread. This suppresses the deterioration of drainage performance in the vicinity of the tire equator C, which improves wet performance. In addition, since the wide groove portion 7 is provided inward in the tire radial direction of the sipe 6, high wet performance is maintained until the tire is almost completely worn. Therefore, the tire 1 of the present invention can have improved wet performance while maintaining rolling resistance performance.

As used herein, the term "sipe" refers to a slit-like recess having a width Ws of less than 1.5 mm in a direction perpendicular to the longitudinal direction thereof. Slit-like recesses are distinguished from grooves having a width of not less than 1.5 mm.

In the present embodiment of the invention, the circumferential grooves 3 continuously extend in the tire circumferential direction. Each circumferential groove 3 includes first portions 3s continuously inclined toward one side with respect to the tire circumferential direction, and second portions 3t continuously inclined in a direction opposite to that of the first portions 3s. The first portions 3s and the second portions 3t are formed so as to be alternately arranged. The peak portion K is formed at an intersection of the first portion 3s and the second portion 3t. In the circumferential groove 3, the peak portions K include first peak portions K1 which are convex toward the tire equator C, and second peak portions K2 which are convex toward the tread end Te. The first peak portions K1 and the second peak portions K2 are alternately arranged.

In each circumferential groove 3, angles α1 of the first portions 3s and the second portions 3t with respect to the tire circumferential direction are each preferably not less than 5 degrees, more preferably not less than 10 degrees, and preferably not greater than 30 degrees, more preferably not greater than 25 degrees.

The first portions 3s and the second portions 3t extend in a straight manner, for example. The first portions 3s and the second portions 3t are not limited to such a mode, and may extend in, for example, an arc. In other words, each circumferential groove 3 may extend in a wavy manner.

Each crown circumferential groove 3B has a pair of groove walls 10e which extend in the longitudinal direction thereof. Each shoulder circumferential groove 3A also has a pair of groove walls 10i which extend in the longitudinal direction thereof. The pair of groove walls 10e are at least partially brought into contact with each other when the normal load is applied. The pair of groove walls 10i are not brought into contact each other when the normal load is applied. Such a crown circumferential groove 3B has high apparent stiffness due to the contact, and therefore, has excellent rolling resistance performance. The shoulder circumferential groove 3A improves wet performance.

In order to exhibit such an effect, the groove width W2 of each crown circumferential groove 3B is preferably not less than 1% and more preferably not less than 5%, and is preferably not greater than 20% and more preferably not greater than 15%, of the groove width W1 of each shoulder circumferential groove 3A. The groove width W2 of each crown circumferential groove 3B is also preferably not less than 1.5 mm, and is preferably not greater than 3.0 mm and more preferably not greater than 2.5 mm. The groove width W1 of each shoulder circumferential groove 3A is not particularly limited, and is preferably 6.0 to 16.0 mm.

The lateral grooves 4 include, for example, middle lateral grooves 4A, crown lateral grooves 4B, and shoulder lateral grooves 4C. Each middle lateral groove 4A connects the shoulder circumferential groove 3A and the crown circumferential groove 3B. In the present embodiment of the invention, the middle lateral groove 4A connects the peak portion K of the shoulder circumferential groove 3A and the peak portion K of the crown circumferential groove 3B. Each crown lateral groove 4B connects the pair of crown circumferential grooves 3B. In the present embodiment of the invention, the crown lateral groove 4B connects the peak portions K of the crown circumferential grooves 3B. Each shoulder lateral groove 4C connects, for example, the shoulder circumferential groove 3A and the tread end Te. In the present embodiment of the invention, the shoulder lateral groove 4C connects the peak portion K of the shoulder circumferential groove 3A and the tread end Te.

In the present embodiment of the invention, each lateral groove 4 extends in a straight manner. The lateral groove 4 may extend in an arc, wavy, or zigzag manner. Each lateral groove 4 is inclined with respect to the tire axial direction. Such a lateral groove 4 can smoothly drain water from the groove by utilizing the rotation of the tire 1. An angle α2 of each lateral groove 4 with respect to the tire axial direction is preferably not less than 5 degrees and more preferably not less than 10 degrees, and is preferably not greater than 25 degrees and more preferably not greater than 20 degrees. The middle lateral grooves 4A, the crown lateral grooves 4B, and the shoulder lateral grooves 4C have the same angle α2. As used herein, the term "same angle", of course, means that the difference in angle between the lateral grooves 4 is 0 degrees, and also encompasses an embodiment in which the absolute value of the difference in angle is not greater than 5 degrees.

A groove width W3 of each lateral groove 4 is, for example, larger than the groove width W2 of each crown circumferential groove 3B. The groove width W3 of each lateral groove 4 is smaller than the groove width W1 of each shoulder circumferential groove 3A.

The middle lateral grooves 4A, the crown lateral grooves 4B, and the shoulder lateral grooves 4C have the same groove width W3. As used herein, the term "same groove width", of course, means that the difference in groove width between the lateral grooves 4 is 0 (zero), and also encompasses an embodiment that the difference in groove width between the lateral grooves 4 is not greater than 2 mm.

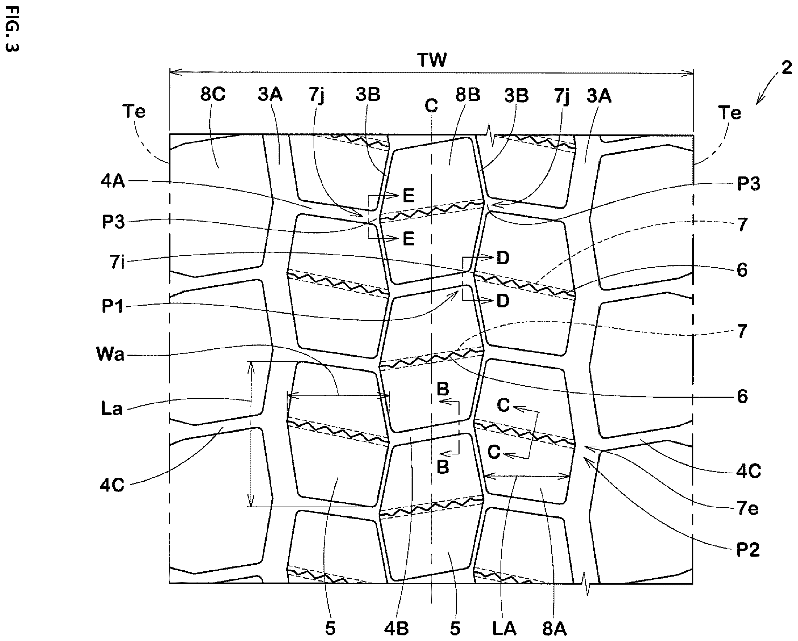

FIG. 3 is a plan view of the tread portion 2. As shown in FIG. 3, the tread portion 2 of the present embodiment of the invention includes a plurality of middle blocks 8A, a plurality of crown blocks 8B, and a plurality of shoulder blocks 8C. Each middle block 8A is delimited by the shoulder circumferential groove 3A, the crown circumferential groove 3B, and the middle lateral grooves 4A adjacent to each other in the tire circumferential direction. The crown block 8B is delimited by the pair of crown circumferential grooves 3B, and the crown lateral grooves 4B adjacent to each other in the tire circumferential direction. Each shoulder block 8C is delimited by the tread end Te, the shoulder circumferential groove 3A, and the shoulder lateral grooves 4C adjacent to each other in the tire circumferential direction.

In the present embodiment of the invention, the middle blocks 8A and the crown blocks 8B are formed as the hexagonal blocks 5. In addition, each middle block 8A of the present embodiment of the invention is provided with the sipe 6 and the wide groove portion 7. Furthermore, for example, each crown block 8B is provided with the sipe 6 and the wide groove portion 7.

As used herein, each hexagonal block 5 refers to a barrel-shaped block that has a length LA in the tire axial direction which continuously increases from both ends in the tire circumferential direction of the block toward the center thereof and that expands toward both sides in the tire axial direction. Such a hexagonal block 5 has high stiffness in the tire axial direction, and therefore, has high wear resistance performance.

In order to effectively exhibit the above effect, the ratio (La/Wa) of a length La in the tire circumferential direction to a width Wa in the tire axial direction of the hexagonal block 5 is preferably not less than 1.2 and more preferably not less than 1.3, and is preferably not greater than 1.8 and more preferably not greater than 1.7. The length La and the width Wa are each a greatest value of the hexagonal block 5.

Both ends of each of the sipes 6 and the wide groove portions 7 are connected to the circumferential grooves 3. This further enhances wet performance. In the present embodiment of the invention, both ends of each of the sipes 6 and the wide groove portions 7 are connected to the peak portions K.

As shown in FIGS. 2 and 3, each sipe 6 extends, for example, in a zigzag manner in the sipe longitudinal direction and the tire radial direction. In such a sipe 6, when the tire is rotating, the walls of the sipe 6 are brought into contact with each other and support each other, which increases apparent block stiffness, and therefore, improves rolling resistance performance and wear resistance performance. This type of sipe 6 is called a Miura fold (three-dimensional) sipe, for example.

The sipe 6 is not limited to such a mode, and may, for example, extend in a straight manner in one of or both the sipe longitudinal direction and the tire radial direction.

Each wide groove portion 7 has a circular or elliptical transverse cross-sectional shape. Such a wide groove portion 7 reduces strain in a bottom portion of the sipe and suppresses the occurrence of cracks or the like. The wide groove portion 7 extends in a straight manner in the longitudinal direction thereof. Such a wide groove portion has low drain resistance thereinside, and therefore, enhances wet performance.

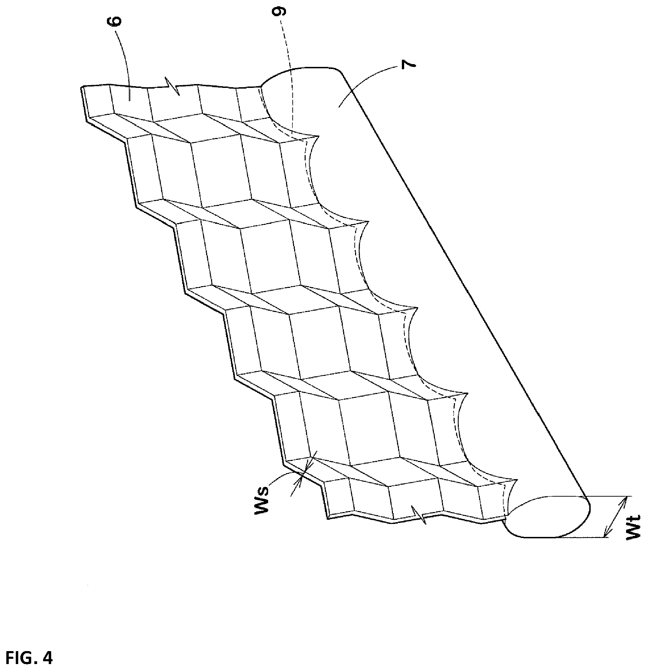

FIG. 4 is a perspective view of the sipe 6 and the wide groove portion 7. As shown in FIG. 4, a connection portion 9 at which the sipe 6 and the wide groove portion 7 are connected is shaped to extend in a zigzag manner in the longitudinal direction of the wide groove portion 7. Such a connection portion 9 serves to maintain the stiffness of the hexagonal block 5 at a higher level.

The width (greatest width) Wt of the wide groove portion 7 is not particularly limited, and is preferably not less than 7 times and more preferably not less than 8 times, and is preferably not greater than 13 times and more preferably not greater than 12 times, the width (a width on a tread surface 5a of the hexagonal block 5) Ws of the sipe 6. In addition, as shown in FIG. 2, a depth dt of the wide groove portion 7 is smaller than a depth ds of the sipe 6. Due to this, the block stiffness of the hexagonal block 5 is maintained at a high level. The depth dt of the wide groove portion 7 is preferably not less than 10%, more preferably not less than 20%, and even more preferably not less than 25%, and is preferably not greater than 50%, more preferably not greater than 40%, and even more preferably not greater than 35%, of the depth ds of the sipe 6. This improves rolling resistance performance and wet performance in a well-balanced manner. The sipe 6 and the wide groove portion 7 are partitioned at an outermost end M in the tire radial direction which has a width of 1.5 mm.

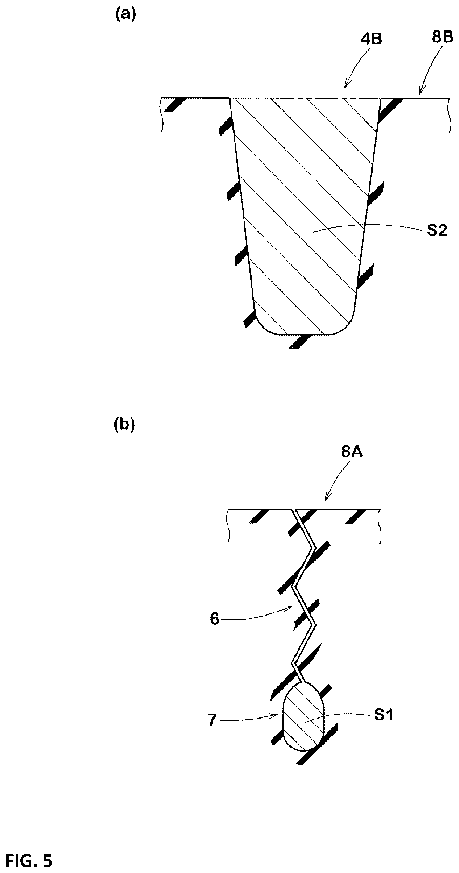

FIG. 5(a) is a cross-sectional view taken along a line B-B in FIG. 3. FIG. 5(b) is a cross-sectional view taken along a line C-C in FIG. 3. FIG. 5(a) indicates a transverse cross-sectional area S2 of the crown lateral groove 4B. FIG. 5(b) indicates a transverse cross-sectional area S1 of the wide groove portion 7 of the middle block 8A. The transverse cross-sectional area S1 of the wide groove portion 7 of the middle block 8A is not less than 10% and preferably not less than 20%, and is not greater than 40% and preferably not greater than 30%, of the transverse cross-sectional area S2 of the crown lateral groove 4B. Since the transverse cross-sectional area S1 of the wide groove portion 7 of the middle block 8A is not less than 10% of the transverse cross-sectional area S2 of the crown lateral groove 4B, the wide groove portion 7 smoothly drains water. Since the transverse cross-sectional area S1 of the wide groove portion 7 of the middle block 8A is not greater than 40% of the transverse cross-sectional area S2 of the crown lateral groove 4B, the stiffness of the middle block 8A is maintained at a high level.

In order to exhibit the same effect, the transverse cross-sectional area of the wide groove portion 7 of the crown block 8B is preferably not less than 10% and more preferably not less than 20%, and is preferably not greater than 40%, more preferably not greater than 30%, of the transverse cross-sectional area of the middle lateral groove 4A (not shown).

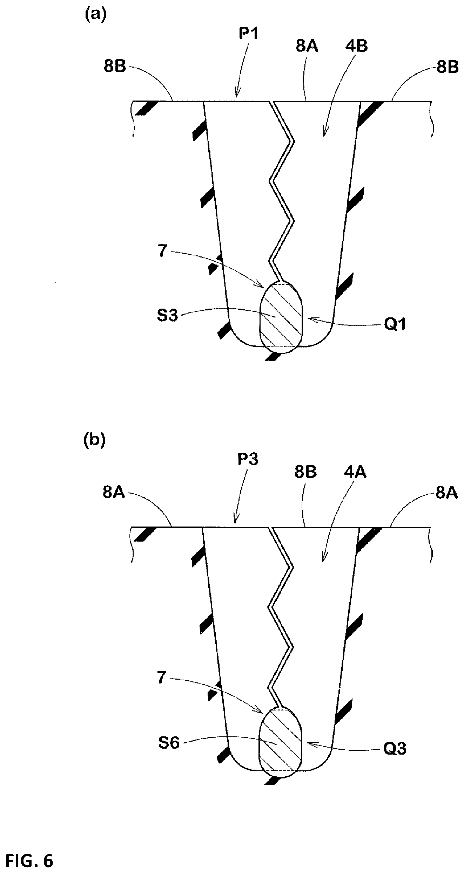

FIG. 6(a) is a cross-sectional view taken along a line D-D in FIG. 3. FIG. 6(a) shows the middle block 8A as viewed from the crown lateral groove 4B in a direction parallel to the tire axial direction. As shown in FIGS. 6(a) and 3, an inner end 7i in the tire axial direction of the wide groove portion 7 of the middle block 8A overlaps an intersection portion P1 of the crown lateral groove 4B and the crown circumferential groove 3B in the tire circumferential direction. This allows water in the crown lateral groove 4B to drain out of the tread portion 2 through the crown circumferential groove 3B or the wide groove portion 7 of the middle block 8A, which improves wet performance.

In the present embodiment of the invention, not less than 80% of the transverse cross-sectional area S1 of the wide groove portion 7 of the middle block 8A overlaps the intersection portion P1 of the crown lateral groove 4B and the crown circumferential groove 3B in the tire circumferential direction. This allows the above effect to be effectively exhibited. In FIG. 6(a), a transverse cross-sectional area S3 of an overlap portion Q1 where the wide groove portion 7 of the middle block 8A and the intersection portion P1 overlap in tire circumferential direction is indicated by hatching.

An outer end 7e in the tire axial direction of the wide groove portion 7 of the middle block 8A overlaps an intersection portion P2 of the shoulder lateral groove 4C and the shoulder circumferential groove 3A in the tire circumferential direction.

FIG. 6(b) is a cross-sectional view taken along a line E-E in FIG. 3. FIG. 6(b) shows the crown block 8B as viewed from the middle lateral groove 4A in a direction parallel to the tire axial direction. As shown in FIGS. 6(b) and 3, both ends 7j in the tire axial direction of the wide groove portion 7 of the crown block 8B each overlap an intersection portion P3 of the middle lateral groove 4A and the crown circumferential groove 3B in the tire circumferential direction. This allows water in the wide groove portion 7 of the crown block 8B to smoothly flow into the crown circumferential groove 3B or the middle lateral groove 4A, which improves wet performance.

In the present embodiment of the invention, not less than 80% of the transverse cross-sectional area of the wide groove portion 7 of the crown block 8B overlaps the intersection portion P3 at which the middle lateral groove 4A and the crown circumferential groove 3B intersect, in the tire circumferential direction. This allows the above effect to be effectively exhibited. FIG. 6(b) indicates a transverse cross-sectional area S6 of an overlap portion Q3 where the wide groove portion 7 of the crown block 8B and the intersection portion P3 overlap in the tire circumferential direction.

The shoulder lateral grooves 4C and the shoulder blocks 8C each have, for example, a known configuration. Therefore, the shoulder lateral grooves 4C and the shoulder blocks 8C will not be described in detail.

Although the pneumatic tire of the embodiment of the present invention has been described in detail above, the present invention is not limited to the above specific embodiment, and various modifications can be made to implement the present invention within the scope of the appended claims.

### EXAMPLES

Heavy-duty tires (315/70R22.5) having the basic pattern shown in FIG. 1 were produced as test samples according to the specifications described in Table 1. Each test tire was tested for rolling resistance performance, wet performance, and wear resistance performance. The common specifications and the test methods are as follows.
Rim size: 22.5 × 9.00
Internal pressure: 900 kPa

### <Rolling Resistance Performance>

The rolling resistance of each test tire was measured using a rolling resistance testing machine in accordance with ISO 28580 under the following conditions. The results were indicated by indexes with the reciprocal of the value of Example 1 being regarded as 100. The higher the value is, the better the rolling resistance performance is.
Load: 25.01 kN
Speed: 80 km/h

### <Wet Performance>

Wet performance (wet braking performance) was tested in accordance with R117-02 (ECE Regulation, No. 117, Revision 2) using a test vehicle described below. As to wet performance, a braking distance that the test vehicle traveled on a wet road surface from the start of braking at a predetermined initial speed until the test vehicle stopped was measured. The results were indicated by indexes with the reciprocal of the braking distance of Example 1 being regarded as 100. The higher the value is, the better the wet performance is.
Test vehicle: truck with a load capacity of 10 t (2-D vehicle)
Load: 50% of the standard load weight

### <Wear Resistance Performance>

A travel distance that the above test vehicle traveled until the circumferential groove was worn to 50% was measured. The results were indicated by indexes with the travel distance of Example 1 being regarded as 100. The higher the value is, the better the wear resistance performance is.

The results of the tests are shown in Table 1.

In the respective examples, "W1", "S2", and "La" all have the same values, and "W2", "S1", "S3", and "Wa" are varied.

In Comparative Example 2, W2/W1 which is 0 means that W2 is 0.3 mm.

**[Table 1]**

| | Comparative Example 1 | Comparative Example 2 | Example 1 | Example 2 | Example 3 | Example 4 | Example 5 | Example 6 |
|---|---|---|---|---|---|---|---|---|
| W2/W1 (%) | 100 | 0 | 10 | 30 | 10 | 10 | 10 | 10 |
| S1/S2 (%) | 20 | 20 | 20 | 5 | 50 | 20 | 20 | 20 |
| S3/S1 (%) | 90 | 90 | 90 | 90 | 90 | 60 | 90 | 90 |
| La/Wa (%) | 1.6 | 1.6 | 1.6 | 1.6 | 1.6 | 1.6 | 1.1 | 1.9 |
| Rolling resistance performance | 100 | 105 | 100 | 102 | 95 | 100 | 98 | 100 |
| [Higher value indicates better performance] | | | | | | | | |
| Wet performance [Higher value indicates better performance] | 85 | 80 | 100 | 95 | 103 | 97 | 100 | 100 |
| Wear resistance performance [Higher value indicates better performance] | 105 | 105 | 100 | 100 | 98 | 98 | 98 | 96 |

The results of the tests demonstrated that the tires of the examples have excellent wet performance. The results of the tests also demonstrated that the rolling resistance performance and wear resistance performance of the tires of the examples are maintained at a high level.

## Claims

1. A tire (1) comprising a tread portion (2), wherein
the tread portion (2) includes a plurality of circumferential grooves (3) extending in a zigzag manner in a tire circumferential direction so as to form zigzag peak portions (K), a plurality of lateral grooves (4) connecting the zigzag peak portions (K) of the circumferential grooves (3) adjacent to each other in a tire axial direction, and a plurality of hexagonal blocks (5) formed by the plurality of circumferential grooves (3) and the plurality of lateral grooves (4),
the circumferential grooves (3) include a pair of shoulder circumferential grooves (3A) disposed closer to tread ends (Te), and at least one crown circumferential groove (3B) disposed inward in the tire axial direction of the pair of shoulder circumferential grooves (3A)
each of the hexagonal blocks (5) is provided with a sipe (6) extending in the tire axial direction, and a wide groove portion (7) connected to an inner side in a tire radial direction of the sipe (6) and extending in the tire axial direction with a width (Wt) larger than that of the sipe (6),
wherein
the at least one crown circumferential groove (3B) includes a pair of crown circumferential grooves (3B) provided on both sides of a tire equator (C), respectively,
the plurality of lateral grooves (4) include a plurality of crown lateral grooves (4B) connecting the crown circumferential grooves (3B), and a plurality of middle lateral grooves (4A) connecting the crown circumferential grooves (3B) and the shoulder circumferential grooves (3A),
the plurality of hexagonal blocks (5) include a plurality of middle blocks (8A) each delimited by the crown circumferential groove (3B), the shoulder circumferential groove (3A), and the middle lateral grooves (4A) adjacent to each other in the tire circumferential direction,
an inner end (7i) in the tire axial direction of the wide groove portion (7) of each middle block (8A) overlaps an intersection portion (P1) of the crown lateral groove (4B) and the crown circumferential groove (3B) in the tire circumferential direction, **characterized in that** a groove width (W2) of the crown circumferential groove (3B) is smaller than groove widths (W1) of the pair of shoulder circumferential grooves (3A), and
the transverse cross-sectional area (S1) of the wide groove portion (7) of each middle block (8A) is 10% to 40% of a transverse cross-sectional area (S2) of the crown lateral groove (4B).

2. The tire (1) according to claim 1, wherein
the crown circumferential groove (3B) has a pair of groove walls (10e) extending in a longitudinal direction thereof, and
the pair of groove walls (10e) are at least partially brought into contact with each other when a normal load is applied.

3. The tire (1) according to claim 1 or 2, wherein the groove width (W2) of the crown circumferential groove (3B) is 1% to 20% of the groove width (W1) of the shoulder circumferential groove (3A).

4. The tire (1) according to any one of claims 1 to 3, wherein the sipe (6) extends in a zigzag manner in a sipe longitudinal direction and the tire radial direction.

5. The tire (1) according to any one of claims 1 to 4, wherein the wide groove portion (7) has a circular or elliptical transverse cross-sectional shape.

6. The tire (1) according to any one of claims 1 to 5, wherein not less than 80% of a transverse cross-sectional area (S1) of the wide groove portion (7) of each middle block (8A) overlaps the intersection portion (P1) of the crown lateral groove (4B) in the tire circumferential direction.

7. The tire (1) according to any one of claims 1 to 6, wherein
the plurality of hexagonal blocks (5) include a plurality of crown blocks (8B) delimited by one pair of the crown circumferential grooves (3B), and the crown lateral grooves (4B), and
both ends (7j) in the tire axial direction of the wide groove portion (7) of each crown block (8B) each coincide with an intersection portion (P3) of one of the middle lateral grooves (4A) and one of the crown circumferential grooves (3B) in the tire circumferential direction.

8. The tire (1) according to any one of claims 1 to 7, wherein a ratio (La/Wa) of a length La in the tire circumferential direction to a width Wa in the tire axial direction of each hexagonal block (5) is 1.2 to 1.8.

## Patentansprüche

1. Reifen (1) mit einem Laufflächenabschnitt (2), wobei
der Laufflächenabschnitt (2) eine Vielzahl von Umfangsrillen (3), die sich in einer Zickzack-Weise in einer Reifenumfangsrichtung erstrecken, um Zickzack-Spitzenabschnitte (K) zu bilden, eine Vielzahl von Querrillen (4), die die Zickzack-Spitzenabschnitte (K) der Umfangsrillen (3), die in einer Reifenaxialrichtung benachbart zueinander sind, verbinden, und eine Vielzahl von hexagonalen Blöcken (5), die durch die Vielzahl von Umfangsrillen (3) und die Vielzahl von Querrillen (4) gebildet sind, umfasst,
die Umfangsrillen (3) ein Paar Schulterumfangsrillen (3A), die näher an Laufflächenenden (Te) angeordnet sind, und wenigstens eine Kronenumfangsrille (3B), die in der Reifenaxialrichtung des Paars Schulterumfangsrillen (3A) nach innen hin angeordnet ist, aufweisen,
und
jeder der hexagonalen Blöcke (5) mit einem Feineinschnitt (6), der sich in der Reifenaxialrichtung erstreckt, und einem breiten Rillenabschnitt (7), der mit einer Innenseite in einer Reifenradialrichtung des Feineinschnitts (6) verbunden ist und sich in der Reifenaxialrichtung mit einer Breite (Wt) erstreckt, die größer als die des Feineinschnitts (6) ist, versehen ist,
wobei
die wenigstens eine Kronenumfangsrille (3B) ein Paar Kronenumfangsrillen (3B) umfasst, die jeweils auf beiden Seiten eines Reifenäquators (C) vorgesehen sind,
die Vielzahl von Querrillen (4) eine Vielzahl von Kronenquerrillen (4B), die die Kronenumfangsrillen (3B) verbinden, und eine Vielzahl von mittleren Querrillen (4A), die die Kronenumfangsrillen (3B) und die Schulterumfangsrillen (3A) verbinden, umfasst,
die Vielzahl von hexagonalen Blöcken (5) eine Vielzahl von mittleren Blöcken (8A) umfasst, die jeweils durch die Kronenumfangsrille (3B), die Schulterumfangsrille (3A) und die mittleren Querrillen (4A), die in der Reifenumfangsrichtung benachbart zueinander sind, begrenzt sind,
ein inneres Ende (7i) in der Reifenaxialrichtung des breiten Rillenabschnitts (7) jedes mittleren Blocks (8A) einen Schnittabschnitt (P1) der Kronenquerrille (4B) und der Kronenumfangsrille (3B) in der Reifenumfangsrichtung überlappt,
**dadurch gekennzeichnet, dass**
eine Rillenbreite (W2) der Kronenumfangsrille (3B) kleiner als Rillenbreiten (W1) des Paars Schulterumfangsrillen (3A) ist, und
die Querquerschnittsfläche (S1) des breiten Rillenabschnitts (7) jedes mittleren Blocks (8A) 10 % bis 40 % einer Querquerschnittsfläche (S2) der Kronenquerrille (4B) beträgt.

2. Reifen (1) nach Anspruch 1, wobei
die Kronenumfangsrille (3B) ein Paar Rillenwände (10e) aufweist, die sich in einer Längsrichtung davon erstrecken, und
das Paar Rillenwände (10e) wenigstens teilweise miteinander in Kontakt gebracht wird, wenn eine normale Last aufgebracht wird.

3. Reifen (1) nach Anspruch 1 oder 2, wobei die Rillenbreite (W2) der Kronenumfangsrille (3B) 1 % bis 20 % der Rillenbreite (W1) der Schulterumfangsrille (3A) beträgt.

4. Reifen (1) nach einem der Ansprüche 1 bis 3, wobei sich der Feineinschnitt (6) in einer Zickzack-Weise in einer Feineinschnittlängsrichtung und der Reifenradialrichtung erstreckt.

5. Reifen (1) nach einem der Ansprüche 1 bis 4, wobei der breite Rillenabschnitt (7) eine kreisförmige oder elliptische Querschnittsform aufweist.

6. Reifen (1) nach einem der Ansprüche 1 bis 5, wobei nicht weniger als 80 % einer Querquerschnittsfläche (S1) des breiten Rillenabschnitts (7) jedes mittleren Blocks (8A) den Schnittabschnitt (P1) der Kronenquerrille (4B) in der Reifenumfangsrichtung überlappt.

7. Reifen (1) nach einem der Ansprüche 1 bis 6, wobei
die Vielzahl von hexagonalen Blöcken (5) eine Vielzahl von Kronenblöcken (8B) aufweist, die durch ein Paar der Kronenumfangsrillen (3B) und der Kronenquerrillen (4B) begrenzt sind, und
beide Enden (7j) in der Reifenaxialrichtung des breiten Rillenabschnitts (7) jedes Kronenblocks (8B) jeweils mit einem Schnittabschnitt (P3) einer der mittleren Querrillen (4A) und einer der Kronenumfangsrillen (3B) in der Reifenumfangsrichtung zusammenfallen.

8. Reifen (1) nach einem der Ansprüche 1 bis 7, wobei ein Verhältnis (La/Wa) einer Länge La in der Reifenumfangsrichtung zu einer Breite Wa in der Reifenaxialrichtung jedes hexagonalen Blocks (5) 1,2 bis 1,8 beträgt.

## Revendications

1. Pneumatique (1) comprenant une portion formant bande de roulement (2), dans lequel
la portion formant bande de roulement (2) inclut une pluralité de rainures circonférentielles (3) s'étendant d'une manière en zigzag dans une direction circonférentielle du pneumatique de manière à former des portions de crête en zigzag (K), une pluralité de rainures latérales (4) connectant les portions de crête en zigzag (K) des rainures circonférentielles (3) adjacentes les unes aux autres dans une direction axiale du pneumatique, et une pluralité de blocs hexagonaux (5) formés par la pluralité de rainures circonférentielles (3) et la pluralité de rainures latérales (4),
les rainures circonférentielles (3) incluent une paire de rainures circonférentielles d'épaulement (3A) disposées plus proches d'extrémités de bande de roulement (Te), et au moins une rainure circonférentielle de couronne (3B) disposée à l'intérieur dans la direction axiale du pneumatique de la paire de rainures circonférentielles d'épaulement (3A), et
chacun des blocs hexagonaux (5) est pourvu d'une fente (6) s'étendant dans la direction axiale du pneumatique, et d'une portion de rainure large (7) connectée à un côté intérieur dans une direction radiale du pneumatique de la fente (6) et s'étendant dans la direction axiale du pneumatique avec une largeur (Wt) plus grande que celle de la fente (6),
dans lequel
ladite au moins une rainure circonférentielle de couronne (3B) inclut une paire de rainures circonférentielles de couronne (3B) prévues sur les deux côtés d'un équateur de pneumatique (C), respectivement,
la pluralité de rainures latérales (4) incluent une pluralité de rainures latérales de couronne (4B) connectant les rainures circonférentielles de couronne (3B), et une pluralité de rainures latérales médianes (4A) connectant les rainures circonférentielles de couronne (3B) et les rainures circonférentielles d'épaulement (3A),
la pluralité de blocs hexagonaux (5) incluent une pluralité de blocs médians (8A) délimités chacun par la rainure circonférentielle de couronne (3B), la rainure circonférentielle d'épaulement (3A), et les rainures latérales médianes (4A) adjacentes les unes aux autres dans la direction circonférentielle du pneumatique,
une extrémité intérieure (7i) dans la direction axiale du pneumatique de la portion de rainure large (7) de chaque bloc médian (8A) est en chevauchement avec une portion d'intersection (P1) de la rainure latérale de couronne (4B) et de la rainure circonférentielle de couronne (3B) dans la direction circonférentielle du pneumatique,
**caractérisé en ce que**
une largeur de rainure (W2) de la rainure circonférentielle de couronne (3B) est inférieure à des largeurs de rainure (W1) de la paire de rainures circonférentielles d'épaulement (3A), et
l'aire de section en coupe transversale (S1) dans la portion de rainure large (7) de chaque bloc médian (8A) est de 10 % à 40 % d'une aire de section en coupe transversale (S2) de la rainure latérale de couronne (4B).

2. Pneumatique (1) selon la revendication 1, dans lequel
la rainure circonférentielle de couronne (3B) a une paire de parois de rainure (10e) s'étendant dans une direction longitudinale de celle-ci, et
la paire de parois de rainure (10e) sont au moins en partie amenées en contact l'une avec l'autre quand une charge normale est appliquée.

3. Pneumatique (1) selon la revendication 1 ou 2, dans lequel la largeur de rainure (W2) de la rainure circonférentielle de couronne (3B) est de 1 % à 20 % de la largeur de rainure (W1) de la rainure circonférentielle d'épaulement (3A).

4. Pneumatique (1) selon l'une quelconque des revendications 1 à 3, dans lequel la fente (6) s'étend d'une manière en zigzag dans une direction longitudinale de la fente et dans la direction radiale du pneumatique.

5. Pneumatique (1) selon l'une quelconque des revendications 1 à 4, dans lequel la portion de rainure large (7) a une forme de section en coupe transversale circulaire ou elliptique.

6. Pneumatique (1) selon l'une quelconque des revendications 1 à 5, dans lequel pas moins de 80 % d'une aire de section en coupe transversale (S1) de la portion de rainure large (7) de chaque bloc médian (8A) est en chevauchement avec la portion d'intersection (P1) de la rainure latérale de couronne (4B) dans la direction circonférentielle du pneumatique.

7. Pneumatique (1) selon l'une quelconque des revendications 1 à 6, dans lequel
la pluralité de blocs hexagonaux (5) incluent une pluralité de blocs de couronne (8B) délimités par une paire des rainures circonférentielles de couronne (3B), et les rainures latérales de couronne (4B), et
les deux extrémités (7j) dans la direction axiale du pneumatique de la portion de rainure large (7) de chaque bloc de couronne (8B) coïncident avec une portion d'intersection (P3) de l'une des rainures latérales médianes (4A) et de l'une des rainures circonférentielles de couronne (3B) dans la direction circonférentielle du pneumatique.

8. Pneumatique (1) selon l'une quelconque des revendications 1 à 7, dans lequel un rapport (La/Wa) d'une longueur La dans la direction circonférentielle du pneumatique sur une largeur Wa dans la direction axiale du pneumatique de chaque bloc hexagonal (5) est de 1,2 à 1,8.
